# EUROPEAN PATENT SPECIFICATION

(11) **EP 2 645 538 B1**
(45) Date of publication and mention of the grant of the patent: **12.11.2014**
(21) Application number: 12161211.3
(22) Date of filing: 26.03.2012
(51) Int. Cl.: H02K 3/38, H02K 3/51

(54) **Rotor for an electric machine**
Rotor für eine elektrische Maschine
Rotor pour machine électrique

(43) Date of publication of application: 02.10.2013
(73) Proprietor: Alstom Technology Ltd, 5400 Baden (CH)
(72) Inventor: Iafigliola, Roberto, 5400 Baden (CH); Rajput, Nagib, 5430 Wettingen (CH); Holmes, Andrew John, Westmead NSW 2145 (AU); Hediger, Daniel, 5504 Othmarsingen (CH); Vetterli, Stefan, 5605 Dottikon (CH); Riedling, Yvonne, 5242 Birr (CH)

(56) References cited:
- EP-A1- 1 628 382
- JP-A- 63 077 339

## Description

### TECHNICAL FIELD

The present disclosure relates to a rotor for an electric machine. For example the electric machine can be a synchronous generator such as a turbogenerator (i.e. a generator to be connected to a gas and/or steam turbine) or a hydro generator (i.e. a generator to be connected to a hydro turbine). Anyhow in different examples the electric machine can also be a different rotating electric machine such as an asynchronous generator, a synchronous or asynchronous motor.

### BACKGROUND

Rotors of electric machines include a rotor body, for example comprising a rotor active part and rotor shafts at the ends thereof. The rotor active part has slots housing insulated conductors. At the ends of the rotor active part, rotor end windings are provided (around the shafts) to connect the conductors housed in different slots together and define a rotor winding.

Around the rotor end windings a retaining ring insulation is provided; in addition, above the retaining ring insulation and connected to the terminal part of the rotor active part, retaining rings are provided, to withhold the rotor end windings against centrifugal forces. The connection of the retaining rings to the rotor active part is achieved by heating the retaining rings and slipping them above the rotor active part.

Since when they are slipped above to the rotor active part and connected to it, the retaining rings are hot, they could damage the insulation of the insulated conductors and/or retaining ring insulation; for this reason a liner sheet around each retaining ring insulation is provided. The retaining rings are then connected above the liner sheet.

JP63077339 describes a rotor winding projected from the drum section of a rotor is held by a retaining ring, and an insulation on the drum section of rotor is formed between the rotor winding and the retaining ring in order to insulate both the rotor winding and the retaining ring. The insulation is divided into two in the circumferential direction, and assembled so that one end in the axial direction of the insulation is oppositely faced to the endside of the copper section of the rotor and the other end to the side surface of a central ring shaped at the axial end section of the retaining ring.

The liner sheet includes two or more cylindrical sections with facing straight lateral borders parallel to the rotor axis.

In order to fix the position of the lateral borders, protruding fingers extend from each cylindrical section; these fingers are housed in ventilation slots of the rotor active part.

This structure could cause drawbacks.

In fact, during operation the fingers could deform, this could cause the lateral borders to move away from their prefixed positions.

In case the lateral borders move to a zone above the insulated conductors, the lateral borders rest along a straight line above the insulated conductor insulation and retaining ring insulation; it was ascertained that this could damage the insulated conductor insulation and/or retaining ring insulation.

In other circumstances, when the borders move to a zone above a pole separation wedge (i.e. those wedges provided between adjacent conductors at the rotor end winding), the pole separation wedge could damage the retaining ring insulation.

### SUMMARY

An aspect of the disclosure includes providing a rotor addressing the above-mentioned drawbacks of the known rotors.

These and further aspects are attained by providing a rotor in accordance with the accompanying claims.

### BRIEF DESCRIPTION OF THE DRAWINGS

Further characteristics and advantages will be more apparent from the description of a preferred but non-exclusive embodiment of the rotor, illustrated by way of non-limiting example in the accompanying drawings, in which:
Figure 1 is a schematic view of a part of a rotor;
Figures 2 through 7 are schematic views (in a plane) of a part of the liner sheet (figures 2, 4, 6) and of a liner sheet portion (figures 3, 5, 7);
Figure 8 is a further schematic view (in a plane) of a part of a liner sheet;
Figure 9 is a part of a rotor with a mounting stop applied on it;
Figures 10 and 11 are schematic views of the mounting stop;
Figure 12 is a schematic cross section through the rotor end winding;
Figure 13 is a schematic view of a rotor; and
Figure 14 is a perspective schematic view of a liner sheet.

### DETAILED DESCRIPTION OF EXEMPLARY EMBODIMENTS

With reference to the attached figures, a rotor 1 with a longitudinal axis 2 (this is a symmetry axis and an axis around which the rotor rotates during operation) includes a rotor body 3 defining a rotor active part 4 and rotor shafts 5 at the ends thereof.

The rotor 1 has slots that house conductors 6. These conductors 6 have a conductive bar made for example of copper and insulation around it. The conductors 6 are connected together to define a rotor winding; in this respect the conductors have portions 7 projecting from the slots of the rotor body 3, bent around the shafts 5 and connected together (end windings).

In the embodiment shown in the figures, around the portions 7 there are wrapped retaining ring insulation 50, a liner sheet 8 around the retaining ring insulation 50, a damper ring 51 around the liner sheet 8 and damper finger sectors 52 around the damper ring 51 and partially housed in the slots.

Then, around the liner sheet 8, a retaining ring 9 is provided.

The liner sheet 8 is defined by two or more parts 10, for example having a cylindrical sector shape. Each part 10 has a front and rear border 12, 13 respectively facing the rotor and facing away from the rotor, and lateral borders 14. The lateral borders 14 of different parts 10 face each other.

The lateral borders 14 are not parallel to the rotor axis 2. Since the lateral borders 14 are not parallel to the rotor axis 2, even if during operation they rest above a portion 7 of a conductor, they do not damage the retaining ring insulation 50, because the edges of the conductors and of the liner sheets are not in line (i.e. aligned).

In addition, between the portions 7 pole separation wedges are provided. If the lateral borders 14 are at a zone of the pole separation wedges, they are able to support a large part of the pole separation wedges, such that the pole separation wedges do not damage the retaining ring insulation.

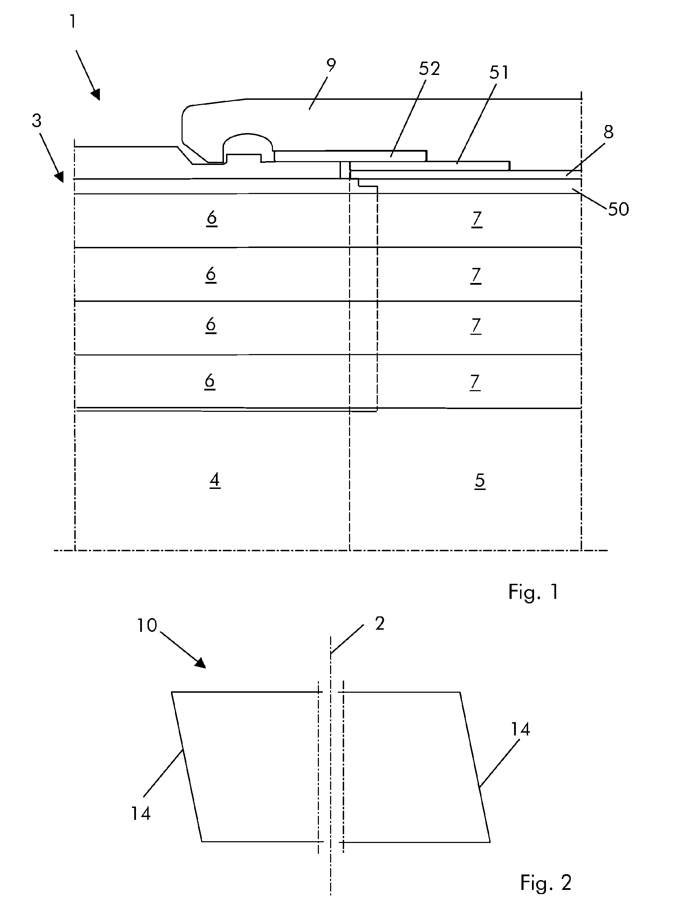

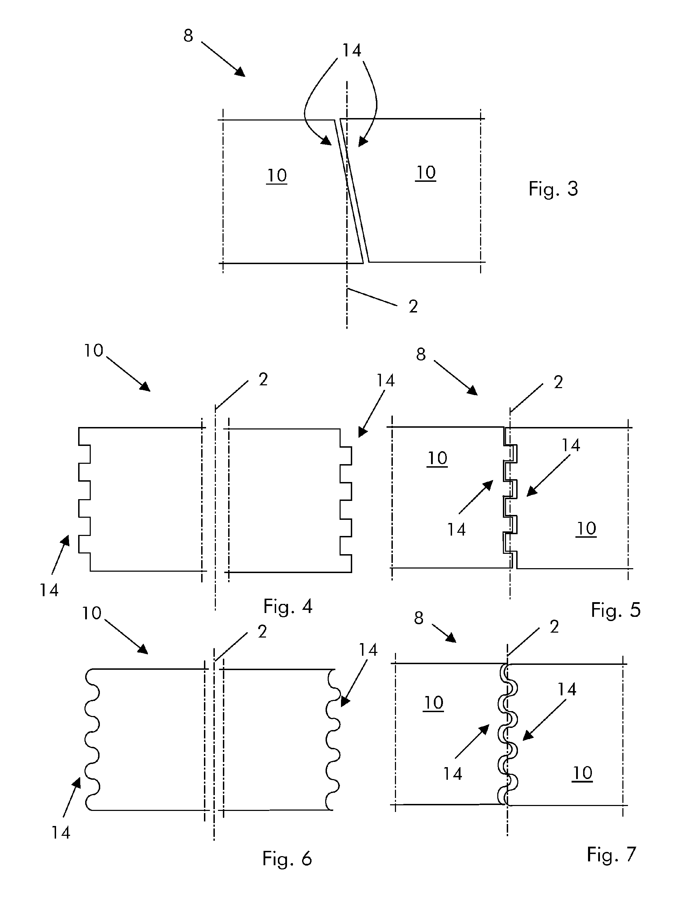

For example, the liner sheet borders are:
- at an angle to the longitudinal axis (figures 2 and 3),
- saw shaped (figures 4 and 5),
- wave shaped (figures 6 and 7).

Other examples are anyhow possible.

Thanks to this structure a precise positioning of the liner sheet 8 (and in particular of the borders 14 thereof) is not mandatory.

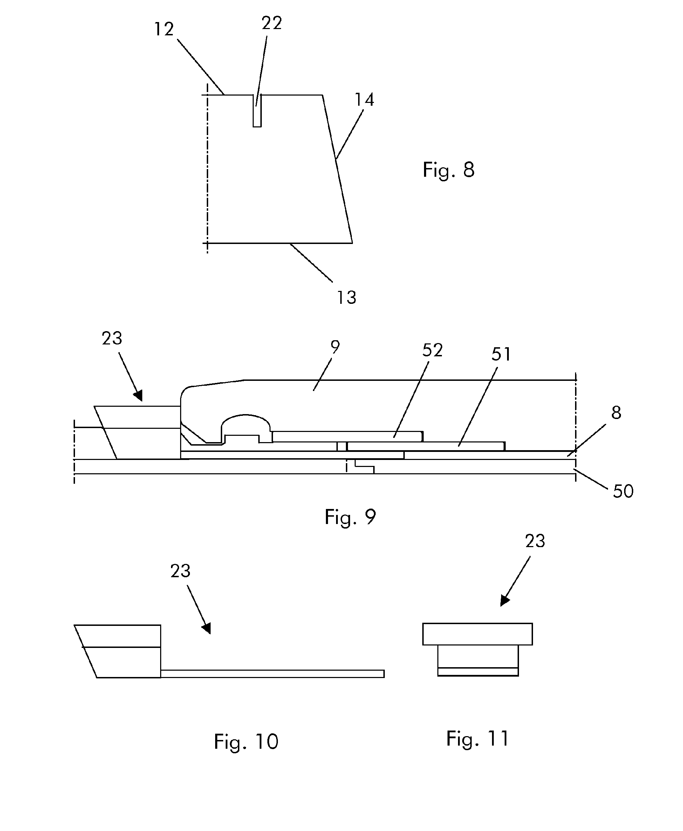

Anyhow, each part 10 can also have a seat 22 for a mounting stop 23 (figure 9).

The mounting stop 23 can be removably connected during mounting to the parts 10; in addition the mounting stop can also be removably connected to the rotor body 3. For example it can be inserted into ventilating slots of the rotor body 3. The removing stop can define the position of the liner sheet 8 (and thus of the borders 14 thereof) without the risks of troubling situation during operation, because it is applied during assembling but it is then removed for operation (i.e. during operation the removing stop 23) is not connected to the rotor 1.

Pole separation wedges 25 are provided between adjacent portions 7 of the conductors 6 (end windings); these wedges 25 are used to mechanically connect together adjacent portions 7 coming from adjacent slots.

During operation, because of centrifugal forces, a gap 26 between adjacent lateral borders 14 of adjacent parts 10 is defined or is made larger.

Advantageously, the gap 26 is asymmetric to a radial axis 27 passing through the center of gravity 28 of the pole separation wedge 25.

This lets the pole separation wedge be covered by the parts 10 of the liner sheet 8 for a large part thereof, such that damages and break risks are reduced.

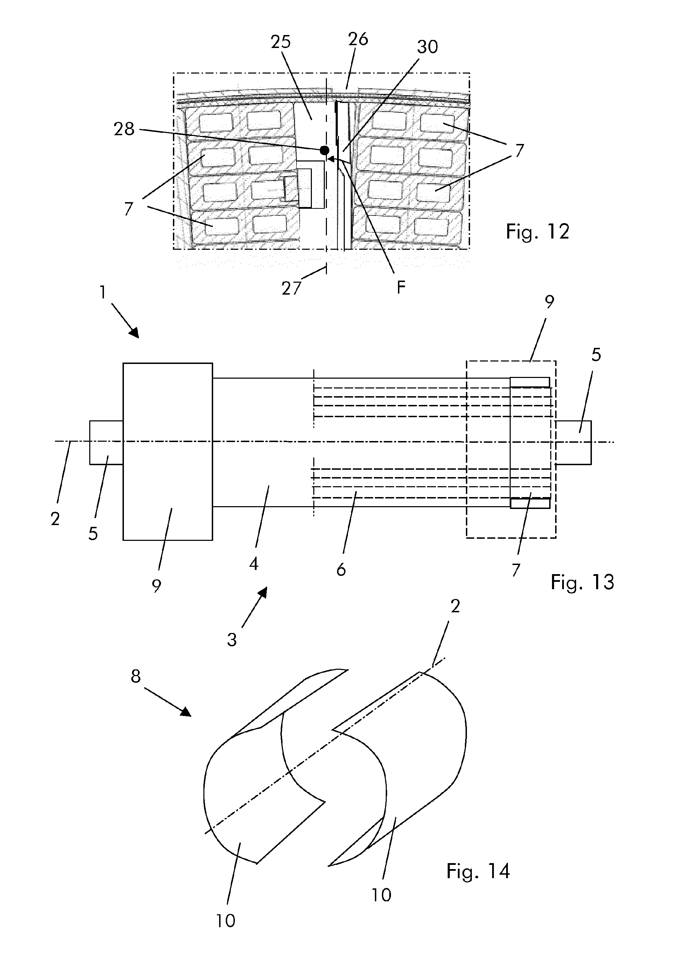

In particular, as shown in figure 12, a spring 30 can be provided to circumferentially press the pole separation wedge 25 (as indicated by arrow F).

The gap 26 is at the spring 30, preferably above the spring 30.

Even if the gap 26 only forms (due to centrifugal forces) during operation, its width can be calculated.

In a different embodiment, the borders 14 can be located at the pole separation. This prevents the retaining ring insulation from damage caused for example by the pole separation wedges pressing to it, because more supporting area is provided.

The rotor with the liner sheet according to the disclosure is useful in particular during assembling.

In fact, during assembling the rotor body 3 is provided with the conductors 6 to form the rotor winding; thus the retaining ring insulation 50 and the liner sheet 8 are connected around the rotor body 3.

When the retaining ring 9 is connected above the retaining ring insulation 50, it is usually not needed an exact positioning of the borders 14 of the parts 10 because:
- the liner sheet damages neither the insulation of the portions 7 nor the retaining ring insulation 50, because compression (and thus risks of damages) only occurs over a very limited zone of the portions 7 (the part overlapping the borders 14) or over the zones of the retaining ring insulation 50 between the portions 7 and the borders 14;
- the risk that the pole separation wedges damage or break the retaining ring insulation is reduced, because the liner sheet prevents rotation of the pole separation wedges and therefore it prevents high stress.

Naturally the features described may be independently provided from one another.

In practice the materials used and the dimensions can be chosen at will according to requirements and to the state of the art.

### REFERENCE NUMBERS

- 1: rotor
- 2: longitudinal axis
- 3: rotor body
- 4: rotor active part
- 5: rotor shafts
- 6: conductors
- 7: portions
- 8: liner sheet
- 9: retaining ring
- 10: parts
- 12: front border
- 13: rear border
- 14: lateral borders
- 22: seat
- 23: mounting stop
- 25: pole separation wedges
- 26: gap
- 27: radial axis
- 28: center of gravity
- 30: spring
- 50: retaining ring insulation
- 51: damper ring
- 52: damper finger sectors
- F: arrow

## Claims

1. A rotor (1) for an electric machine comprising
a rotor body (3) with a longitudinal axis (2), conductors (6) on the rotor (1),
a liner sheet (8) around the rotor body (3) and conductors (6), wherein the liner sheet (8) has two or more cylindrical parts to be joined at their borders (14) to form a full cylinder,
wherein the conductors (6) are connected together to define a rotor winding and the conductors (6) have end windings (7) projecting from the slots of the rotor body (3) and a retaining ring insulator (50) is wrapped around the end windings (7) and the liner sheet (8) is wrapped around the ring insulator (50) and a retaining ring (9) is wrapped around the liner sheet (8) and wherein
the liner sheet (8) has parts (10) with lateral borders (14) to be joined to form a full cylinder that are not parallel to the longitudinal axis (2).

2. The rotor (1) of claim 1, **characterised in that** each part (10) of the liner sheet (8) has a front and rear border (12, 13) respectively facing the rotor body (3) and facing away from the rotor body (3), and lateral borders (14).

3. The rotor (1) of claim 2, **characterised in that** the lateral borders (14) of different parts (10) of the liner sheet (8) face each other.

4. The rotor (1) of claim 1, **characterised in that** the lateral borders (14) are at an angle to the longitudinal axis (2).

5. The rotor (1) of claim 1, **characterised in that** the lateral borders (14) are saw shaped.

6. The rotor (1) of claim 1, **characterised in that** the lateral borders (14) are wave shaped.

7. The rotor (1) of claim 1, **characterised in that** each part (10) has a seat (22) for a mounting stop (23).

8. The rotor (1) of claim 7, **characterised in that** the mounting stop (23) is removably connectable during mounting to a part (10) of the liner sheet (8).

9. The rotor (1) of claim 7, **characterised in that** the mounting stop (23) is removably connectable to the rotor body (3).

10. The rotor (1) of claim 1, **characterised in that** pole separation wedges (25) are provided between adjacent portion (7) projecting from slots of the rotor body (3),
at least during operation a gap (26) is defined between adjacent lateral borders (14) of adjacent liner sheet parts (10),
the gap (26) is asymmetric to a radial axis passing through the center of gravity (28) of the pole separation wedge (25).

11. The rotor (1) of claim 10, **characterised in that** springs (30) are provided to circumferentially press the pole separation wedge (25),
the gap (26) is at the spring (30).

12. The rotor (1) of claim 1, **characterised in that** the lateral borders (14) are located at the pole separation centers.

## Patentansprüche

1. Rotor (1) für eine elektrische Maschine, umfassend:
einen Rotorkörper (3) mit einer Längsachse (2),
Leiter (6) auf dem Rotor (1),
eine Innenisolierungsplatte (8) um den Rotorkörper (3) und die Leiter (6), wobei die Innenisolierungsplatte (8) zwei oder mehrere zylindrische Teile aufweist, die an ihren Rändern (14) verbunden werden, um einen vollständigen Zylinder zu bilden,
wobei die Leiter (6) miteinander verbunden werden, um eine Rotorwicklung zu definieren, wobei die Leiter (6) Endwicklungen (7) aufweisen, die aus den Schlitzen des Rotorkörpers (3) hervorstehen, und wobei eine Halteringisolierung (50) um die Endwicklungen (7) gewickelt ist und die Innenisolierungsplatte (8) um die Ringisolierung (50) und ein Haltering (9) um die Innenisolierungsplatte (8) gewickelt ist, und
wobei die Innenisolierungsplatte (8) Teile (10) mit seitlichen Rändern (14) aufweist, die zum Bilden eines vollständigen Zylinders zusammengefügt werden und nicht parallel zu der Längsachse (2) verlaufen.

2. Rotor (1) nach Anspruch 1, **dadurch gekennzeichnet, dass** jedes Teil (10) der Innenisolierungsplatte (8) einen vorderen und einen hinteren Rand (12, 13), die jeweils zum Rotorkörper (3) bzw. weg von dem Rotorkörper (3) weisen, und seitliche Ränder (14) aufweist.

3. Rotor (1) nach Anspruch 2, **dadurch gekennzeichnet, dass** die seitlichen Ränder (14) der verschiedenen Teile (10) der Innenisolierungswand (8) zueinander weisen.

4. Rotor (1) nach Anspruch 1, **dadurch gekennzeichnet, dass** die seitlichen Ränder (14) in einem Winkel zu der Längsachse (2) angeordnet sind.

5. Rotor (1) nach Anspruch 1, **dadurch gekennzeichnet, dass** die seitlichen Ränder (14) sägenförmig sind.

6. Rotor (1) nach Anspruch 1, **dadurch gekennzeichnet, dass** die seitlichen Ränder (14) wellenförmig sind.

7. Rotor (1) nach Anspruch 1, **dadurch gekennzeichnet, dass** jedes Teil (10) einen Sitz (22) für einen Befestigungsanschlag (23) aufweist.

8. Rotor (1) nach Anspruch 7, **dadurch gekennzeichnet, dass** der Befestigungsanschlag (23) während der Montage an einem Teil (10) der Innenisolierungsplatte (8) entfernbar verbunden werden kann.

9. Rotor (1) nach Anspruch 7, **dadurch gekennzeichnet, dass** der Befestigungsanschlag (23) entfernbar mit dem Rotorkörper (3) verbunden werden kann.

10. Rotor (1) nach Anspruch 1, **dadurch gekennzeichnet, dass**
Stangentrennkeile (25) zwischen benachbarten Abschnitten (7) bereitgestellt sind, die aus den Schlitzen des Rotorkörpers (3) hervorstehen,
und dass mindestens während des Betriebs ein Spalt (26) zwischen benachbarten seitlichen Rändern (14) benachbarter Innenisolierungsplatten (10) definiert wird,
der Spalt (26) asymmetrisch zu einer radialen Achse ist, die durch den Schwerpunkt (28) der Stangentrennkeile (25) verläuft.

11. Rotor (1) nach Anspruch 10, **dadurch gekennzeichnet, dass** Federn (30) bereitgestellt werden, um die Stangentrennkeile (25) umlaufend zu drücken, wobei der Spalt (26) an der Feder (30) vorliegt.

12. Rotor (1) nach Anspruch 1, **dadurch gekennzeichnet, dass** die seitlichen Ränder (14) an den Stangentrennmitten angeordnet sind.

## Revendications

1. Rotor (1) pour une machine électrique comprenant un corps de rotor (3) présentant un axe longitudinal (2),
des conducteurs (6) sur le rotor (1),
une feuille de chemise (8) autour du corps de rotor (3) et des conducteurs (6),
la feuille de chemise (8) présentant deux parties cylindriques ou plus devant être jointes au niveau de leurs bords (14) pour former un cylindre complet,
les conducteurs (6) étant reliés les uns aux autres pour définir un enroulement de rotor et les conducteurs (6) ayant des enroulements d'extrémité (7) faisant saillie à partir des fentes du corps de rotor (3) et un isolateur d'anneau de retenue (50) étant enroulé autour des enroulements d'extrémité (7) et la feuille de chemise (8) étant enroulée autour de l'isolateur d'anneau (50) et un anneau de retenue (9) étant enroulé autour de la feuille de chemise (8), et
la feuille de chemise (8) présentant des parties (10) pourvues de bords latéraux (14) devant être jointes pour former un cylindre complet qui ne sont pas parallèles à l'axe longitudinal (2).

2. Rotor (1) selon la revendication 1, **caractérisé en ce que** chaque partie (10) de la feuille de chemise (8) présente un bord avant et un bord arrière (12, 13) respectivement orienté vers le corps de rotor (3) et orienté à l'opposé du corps de rotor (3), et des bords latéraux (14).

3. Rotor (1) selon la revendication 2, **caractérisé en ce que** les bords latéraux (14) de différentes parties (10) de la feuille de chemise (8) sont orientés les uns vers les autres.

4. Rotor (1) selon la revendication 1, **caractérisé en ce que** les bords latéraux (14) sont situés suivant un angle par rapport à l'axe longitudinal (2).

5. Rotor (1) selon la revendication 1, **caractérisé en ce que** les bords latéraux (14) sont en forme de scie.

6. Rotor (1) selon la revendication 1, **caractérisé en ce que** les bords latéraux (14) sont de forme ondulée.

7. Rotor (1) selon la revendication 1, **caractérisé en ce que** chaque partie (10) présente un logement (22) pour une butée de montage (23).

8. Rotor (1) selon la revendication 7, **caractérisé en ce que** la butée de montage (23) peut être reliée de manière amovible, pendant le montage, à une partie (10) de la feuille de chemise (8).

9. Rotor (1) selon la revendication 7, **caractérisé en ce que** la butée de montage (23) peut être reliée de manière amovible au corps de rotor (3).

10. Rotor (1) selon la revendication 1, **caractérisé en ce que**
des coins de séparation des pôles (25) sont prévus entre des portions adjacentes (7) faisant saillie à partir de fentes du corps de rotor (3),
au moins pendant le fonctionnement, un espace (26) est défini entre des bords latéraux adjacents (14) de parties adjacentes (10) de feuille de chemise, l'espace (26) est asymétrique par rapport à un axe radial passant par le centre de gravité (28) du coin de séparation des pôles (25).

11. Rotor (1) selon la revendication 10, **caractérisé en ce que**
des ressorts (30) sont prévus pour presser circonférentiellement le coin de séparation des pôles (25),
l'espace (26) se trouve au niveau du ressort (30).

12. Rotor (1) selon la revendication 1, **caractérisé en ce que** les bords latéraux (14) sont situés aux centres de séparation des pôles.
